# EUROPEAN PATENT APPLICATION

(11) **EP 4 832 567 A1**
(43) Date of publication of application: **28.10.2026**
(21) Application number: 24918224.7
(22) Date of filing: 22.11.2024
(51) Int. Cl.: H04W 28/08

(54) **COMMUNICATION METHOD AND COMMUNICATION APPARATUS**

(30) Priority: 18.01.2024 CN 202410073885
(71) Applicant: Huawei Technologies Co., Ltd., Shenzhen, Guangdong 518129 (CN)
(72) Inventor: YANG, Yuwen, Shenzhen, Guangdong 518129 (CN); QIN, Yi, Shenzhen, Guangdong 518129 (CN); XU, Rui, Shenzhen, Guangdong 518129 (CN); CAO, Youlong, Shenzhen, Guangdong 518129 (CN)
(74) Representative: Körber, Martin Hans
(86) International application number: PCT/CN2024/133935
(87) International publication number: WO 2025/152615

(57) **Abstract**

An artificial intelligence task assignment method and a communication apparatus are provided. The method includes: A terminal sends first information to a network device, where the first information indicates a computing power state of the terminal or a terminal module; and the terminal further receives second information from the network device, where the second information indicates the terminal to participate in an AI task supported by the computing power state. According to the foregoing method, the terminal may collaboratively participate in execution of the AI task, so that execution efficiency of the AI task can be improved. In addition, the terminal reports its computing power state, so that the network device can indicate the terminal to participate in an AI task that matches the computing power state of the terminal, making assignment of the AI task more appropriate and further improving execution efficiency of the AI task.

## Description

This application claims priority to Chinese Patent Application No. 202410073885.1, filed with the China National Intellectual Property Administration on January 18, 2024, and entitled "COMMUNICATION METHOD AND COMMUNICATION APPARATUS", which is incorporated herein by reference in its entirety.

### TECHNICAL FIELD

Embodiments of this application relate to the communication field, and more specifically, to an artificial intelligence task assignment method and a communication apparatus.

### BACKGROUND

Artificial intelligence (artificial intelligence, AI) is an application of computers or machines, and is used to execute tasks that usually require human intelligence, such as learning, problem solving, decision-making, and natural language processing. AI tasks include, but are not limited to, tasks in fields such as machine learning, natural language processing, and computer vision. With the rapid development of AI technologies, computational workloads of AI tasks is increasing, leading to growing demands for computing power of devices and severely restricting the application of AI.

In the face of massive computational workloads and computing power requirements, improving execution efficiency of the AI tasks is critical to the development of AI.

### SUMMARY

This application provides a communication method, to improve execution efficiency of an AI task by appropriately assigning the AI task.

According to a first aspect, a communication method is provided. The method may be applied to a terminal side, for example, a terminal or a communication module in a terminal, or a circuit or a chip (for example, a modem (modem) chip, also referred to as a baseband (baseband) chip, or a system on chip (system on chip, SoC) chip or a system in package (system in package, SIP) chip including a modem core) that is responsible for a communication function in the terminal. The following uses an example in which the method is applied to the terminal for description.

In the method, the terminal sends first information to a network device, where the first information indicates a computing power state of the terminal or a terminal module; and the terminal further receives second information from the network device, where the second information indicates the terminal to participate in an AI task supported by the computing power state.

According to the foregoing method, the terminal may collaboratively participate in execution of the AI task, so that execution efficiency of the AI task can be improved.

In addition, the terminal reports the computing power state of the terminal, so that the network device can indicate the terminal to participate in an AI task that matches the computing power state of the terminal, to make assignment of the AI task more appropriate and further improve execution efficiency of the AI task.

In a possible design, the computing power state includes at least one of the following: computing power precision, a computing speed, power, a memory state, and a quantity of AI model parameters that can be computed.

According to the foregoing solution, in this application, the computing power state may be further refined, and described in a plurality of different manners. In this way, the computing power state of the terminal or the terminal module can be more accurately indicated, and accuracy of assignment of the AI task can be further improved.

In a possible design, the AI task includes at least one of the following: AI-based data transmission, AI model parameter training, and training data collection of an AI model.

According to the foregoing solution, in this application, the AI task may be further refined, so that the terminal can participate in an AI task that is more suitable for the terminal. In this way, the AI task can be assigned more accurately.

With reference to the first aspect, in some implementations of the first aspect, the method further includes: The terminal receives third information from the network device, where the third information is used to request the terminal to report the computing power state.

In this manner, the AI task can be assigned more appropriately and accurately, so that the terminal can better participate in execution of the AI task, thereby improving efficiency.

With reference to the first aspect, in some implementations of the first aspect, the method further includes: The terminal sends fourth information to the network device, where the fourth information indicates whether the terminal participates in the AI task.

In this manner, the terminal can participate in the AI task more appropriately, so that computing power resources of the terminal can be maximized.

In a possible design, the network device is a core network element or an access network device.

According to a second aspect, a communication method is provided. The method may be applied to a network side, for example, an access network device on the network side, a module (for example, a circuit, a chip, or a chip system) in an access network device, or a logical node, a logical module, or software that can implement all or a part of functions of the access network device; or for another example, a core network element on the network side, a module (for example, a circuit, a chip, or a chip system) in a core network element, or a logical node, a logical module, or software that can implement all or a part of functions of the core network element. The following uses an example in which the method is applied to a network device for description. The network device may be the core network element or the access network device.

In the method, the network device receives first information from a terminal, where the first information indicates a computing power state of the terminal or a terminal module; and the network device further sends second information to the terminal, where the second information indicates the terminal to participate in an AI task supported by the computing power state.

According to the foregoing method, the terminal may collaboratively participate in execution of the AI task, so that execution efficiency of the AI task can be improved.

In addition, the terminal reports the computing power state of the terminal, so that the network device can indicate the terminal to participate in an AI task that matches the computing power state of the terminal, to make assignment of the AI task more appropriate and further improve execution efficiency of the AI task.

In a possible design, the computing power state includes at least one of the following: computing power precision, a computing speed, power, a memory state, and a quantity of AI model parameters that can be computed.

According to the foregoing solution, in this application, the computing power state may be further refined, and described in a plurality of different manners. In this way, the computing power state of the terminal or the terminal module can be more accurately indicated, and accuracy of assignment of the AI task can be further improved.

In a possible design, the AI task includes at least one of the following: AI-based data transmission, AI model parameter training, and training data collection of an AI model.

According to the foregoing solution, in this application, the AI task may be further refined, so that the AI task can be assigned more accurately. In this way, the terminal can participate in an AI task that is more suitable for the terminal.

With reference to the second aspect, in some implementations of the second aspect, the method further includes: The network device sends third information to the terminal, where the third information is used to request the terminal to report the computing power state.

In this manner, the AI task can be assigned more appropriately and accurately, so that the terminal can better participate in execution of the AI task, thereby improving efficiency.

With reference to the second aspect, in some implementations of the second aspect, the method further includes: The network device sends fifth information to a server, where the fifth information indicates the AI task.

With reference to the second aspect, in some implementations of the second aspect, the method further includes: The network device receives fourth information from the terminal, where the fourth information indicates whether the terminal participates in the AI task.

In this manner, the terminal can participate in the AI task more appropriately, so that computing power resources of the terminal can be maximized.

With reference to the second aspect, in some implementations of the second aspect, when the fourth information indicates that the terminal participates in the AI task, the method further includes: The network device sends fifth information to a server, where the fifth information indicates the AI task.

According to a third aspect, this application provides a communication apparatus. The communication apparatus has a function of implementing the first aspect. For example, the communication apparatus includes a corresponding module, unit, or means (means) for performing operations in the first aspect. The module, the unit, or the means may be specifically implemented by using software, implemented by using hardware, or implemented by using a combination of software and hardware.

According to a fourth aspect, this application provides a communication apparatus. The communication apparatus has a function of implementing the second aspect. For example, the communication apparatus includes a corresponding module, unit, or means (means) for performing operations in the second aspect. The module, the unit, or the means may be specifically implemented by using software, implemented by using hardware, or implemented by using a combination of software and hardware.

According to a fifth aspect, this application provides a communication apparatus. The communication apparatus includes an interface circuit and one or more processors. The one or more processors are coupled to a memory. The memory is configured to store a part or all of a necessary computer program or instructions for implementing the function in the first aspect. The one or more processors may execute the computer program or instructions. When the computer program or instructions are executed, the communication apparatus is caused to implement the method in any one of the possible designs or implementations of the first aspect. The interface circuit is configured to implement a communication function in the communication apparatus and/or a communication function between the communication apparatus and another apparatus or component.

In a possible design, the processor is configured to communicate with the another apparatus or component through the interface circuit.

In a possible design, the communication apparatus may further include the memory.

The communication apparatus may be a terminal, a communication module in a terminal, or a chip that is responsible for a communication function in a terminal, for example, a modem chip (also referred to as a baseband chip) or an SoC or SIP chip that includes a modem module.

According to a sixth aspect, this application provides a communication apparatus. The communication apparatus includes an interface circuit and one or more processors. The one or more processors are coupled to a memory. The memory is configured to store a part or all of a necessary computer program or instructions for implementing the function in the second aspect. The one or more processors may execute the computer program or instructions. When the computer program or instructions are executed, the communication apparatus is caused to implement the method in any one of the possible designs or implementations of the second aspect. The interface circuit is configured to implement a communication function in the communication apparatus and/or a communication function between the communication apparatus and another apparatus or component.

In a possible design, the processor is configured to communicate with the another apparatus or component through the interface circuit.

In a possible design, the communication apparatus may further include the memory.

The communication apparatus may be an access network device, a module (for example, a circuit, a chip, or a chip system) in an access network device, or a logical node, a logical module, or software that can implement all or a part of functions of the access network device. Alternatively, the communication apparatus may be a core network element, or a module (for example, a circuit, a chip, or a chip system) in a core network element, or a logical node, a logical module, or software that can implement all or a part of functions of the core network element.

According to a seventh aspect, this application provides a communication system. The communication system may include the communication apparatus according to the third aspect and the communication apparatus according to the fourth aspect.

According to an eighth aspect, this application provides a computer-readable storage medium. The computer-readable storage medium stores computer-readable instructions. When a computer reads and executes the computer-readable instructions, the computer is caused to perform the method in any one of the possible designs of the first aspect and the second aspect.

According to a ninth aspect, this application provides a computer program product. When a computer reads and executes the computer program product, the computer is caused to perform the method in any one of the possible designs of the first aspect and the second aspect.

It should be understood that, for beneficial effects of the third aspect to the ninth aspect, refer to the first aspect or the second aspect and the possible implementations of the first aspect and the second aspect. Details are not described herein again.

### BRIEF DESCRIPTION OF DRAWINGS

FIG. 1 is a diagram of a communication system to which an embodiment of this application is applicable;
FIG. 2 to FIG. 4 are diagrams of architectures of communication systems according to embodiments of this application;
FIG. 5 is a schematic flowchart of a communication method according to this application;
FIG. 6 is a possible example block diagram of a communication apparatus according to an embodiment of this application; and
FIG. 7a and FIG. 7b are a diagram of a structure of a terminal 1000 according to an embodiment of this application.

### DESCRIPTION OF EMBODIMENTS

The following describes technical solutions in this application with reference to the accompanying drawings.

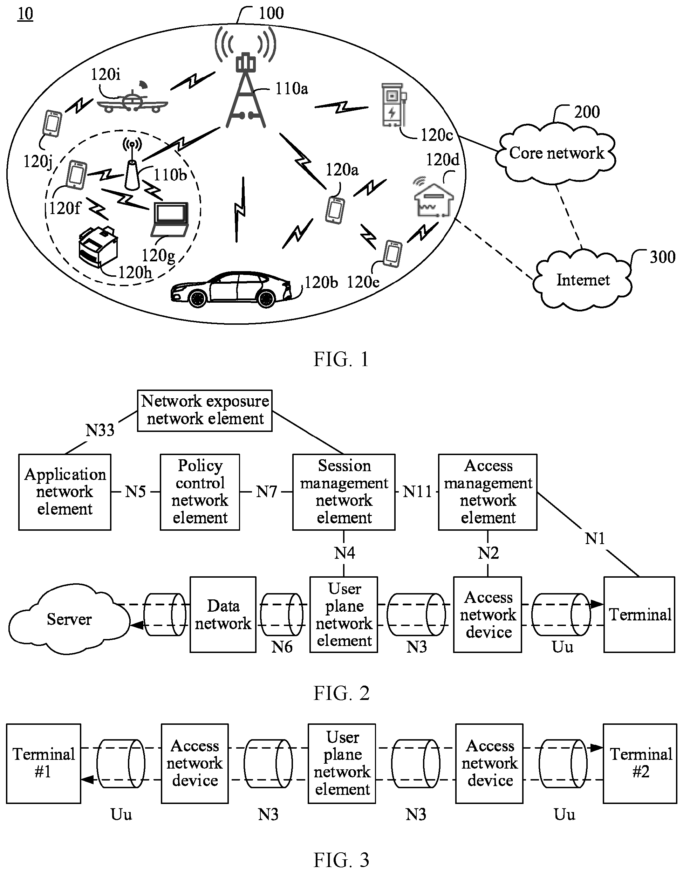

FIG. 1 is a diagram of a communication system to which an embodiment of this application is applicable.

As shown in FIG. 1, a communication system 10 includes a radio access network (radio access network, RAN) 100 and a core network (core network, CN) 200. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of the core network and a logical function of the radio access network.

The RAN 100 may be a cellular system related to the 3rd generation partnership project (3rd generation partnership project, 3GPP), for example, a 4th generation (4th generation, 4G) mobile communication system, a 5th generation (5th generation, 5G) mobile communication system, or a future-oriented evolved system (for example, a 6th generation (6th generation, 6G) mobile communication system). The RAN 100 may alternatively be an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates the foregoing two or more systems.

The RAN node 110 may also be sometimes referred to as an access network device, a RAN entity, an access node, or the like, and constitutes a part of the communication system, to help a terminal implement radio access. A plurality of RAN nodes 110 in the communication system 10 may be nodes of a same type, or may be nodes of different types. In some scenarios, roles of the RAN node 110 and the terminal 120 are relative to each other. For example, a network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. The RAN node 110 and the terminal 120 are both referred to as communication apparatuses sometimes. For example, network elements 110a and 110b in FIG. 1 may be understood as communication apparatuses having a base station function, and network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or a part of functions of the RAN node in this application may alternatively be implemented by a software function running on hardware, or may be implemented by a virtualization function instantiated on a platform (for example, a cloud platform). A communication module, a circuit, or a chip that performs a corresponding communication function may be further disposed in the RAN node. Program instructions used to execute a corresponding communication function and corresponding program instructions may be further disposed in the RAN node. The RAN node in this application may alternatively be a logical node, a logical module, or software that can implement all or the part of the functions of the RAN node.

In another possible scenario, a plurality of RAN nodes coordinate to assist a terminal in implementing radio access, and different RAN nodes separately implement a part of functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, in a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit of the CU (or the CU-CP and the CU-UP), the DU, and the RU in this application may be implemented by using a software module, a hardware module, or a combination of a software module and a hardware module.

The terminal (terminal) 120 may be a device or a module that accesses the foregoing communication system and that has a corresponding communication function. The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine type communication (machine type communication, MTC), an internet of things (internet of things, IoT), virtual reality, augmented reality, industrial control, autonomous driving, telemedicine, a smart grid, smart home, a smart office, a smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a robot arm, a smart home device, a transport vehicle having a wireless communication function, a communication module, or the like. A device form of the terminal is not limited in embodiments of this application. A communication module, a circuit, or a chip that performs a corresponding communication function is usually disposed in the terminal. Program instructions used to execute a corresponding communication function may be further disposed in the terminal.

It may be understood that, FIG. 1 is merely an example, and does not constitute any limitation on the protection scope of this application. The communication method provided in embodiments of this application may further involve a network element that is not shown in FIG. 1. Certainly, the communication method provided in embodiments of this application may alternatively include only a part of network elements shown in FIG. 1.

FIG. 2 is a diagram of an architecture of a communication system according to an embodiment of this application.

As shown in FIG. 2, the communication system may include a server (server), a data network (data network, DN), a core network, an access network device, and a terminal. The core network includes a network exposure network element, an application network element, a policy control network element, a session management network element, an access management network element, a user plane network element, and the like. The communication system shown in FIG. 2 may also be referred to as a server-network-terminal architecture. The following separately describes the parts in the communication system.
(1) For descriptions of the access network device and the terminal, refer to the foregoing descriptions. The terminal may be a device like headset extended reality (extended reality, XR) glasses, a video player, a holographic projector, a mobile phone, a computer, or a robot.
(2) The data network DN provides, for example, carrier services, internet access, or third-party services.
(3) The server encodes and renders video sources, and so on.
(4) The core network is a device in a core network (core network, CN) that provides service support for the terminal. The core network may be configured to complete three major functions of registration, connection, and session management. Currently, some examples of core network devices are: an application network element, a network exposure network element, a policy control network element, a session management network element, an access management network element, and a user plane network element. The following describes the network elements in the core network in detail.

Application network element: In a 5G communication system, the application network element may be an application function (application function, AF) network element, represents an application function of a third party or a carrier, is an interface for obtaining external application data in a 5G network, and is mainly configured to transfer a requirement of an application side for a network side.

Network exposure network element: In a long term evolution (long term evolution, LTE) communication system, the network exposure network element may be a service capability exposure function (service capability exposure function, SCEF) network element. In the 5G communication system, the network exposure network element may be a network exposure function (network element function, NEF) network element, is mainly configured to expose a service and a capability of a 3GPP network function to the AF, and may further cause the AF to provide information for the 3GPP network function.

The session management network element is mainly used for session management, internet protocol (internet protocol, IP) address assignment and management of the terminal, selection of a manageable user plane function, termination of interfaces toward policy control and charging functions, downlink data notification, and the like. In the LTE communication system, the session management network element may be a serving gateway control plane (serving gateway control plane, SGW-C), a packet data network gateway control plane (packet data network gateway control plane, PGW-C), or a network element in which an SGW-C and a PGW-C are co-deployed. In the 5G communication system, the session management network element may be a session management function (session management function, SMF) network element, and completes terminal IP address assignment, UPF selection, charging and QoS policy control, and the like.

The access management network element is mainly used for mobility management, access management, and the like, and may be configured to implement functions in mobility management entity (mobility management entity, MME) functions other than session management, for example, lawful interception and access authorization/authentication. In the LTE communication system, the access management network element may be an MME network element. In the 5G communication system, the access management network element may be an access and mobility management function (access and mobility management function, AMF), and mainly performs functions such as mobility management and access authentication/authorization. In addition, the access management network element is further responsible for transferring a user policy between the terminal and a policy control function (policy control function, PCF) network element.

The policy control network element includes a user subscription data management function, a policy control function, a charging policy control function, quality of service (quality of service, QoS) control, and the like, is a unified policy framework used to guide network behavior, and provides policy rule information and the like for a control plane function network element (for example, the AMF or SMF network element). In the LTE communication system, the policy control network element may be a policy control and charging function (policy control and charging function, PCRF). In the 5G communication system, the policy control network element may be a PCF network element. In the 5G communication system, the application network element may be a network slice selection function (network slice selection function, NSSF) network element.

The user plane network element serves as an interface to the data network, and completes functions such as user plane data forwarding, session/flow-level charging statistics, and bandwidth throttling, that is, packet routing and forwarding, quality of service (quality of service, QoS) handling for user plane data, and the like. In the LTE communication system, the user plane network element may be a serving gateway user plane (serving gateway user plane, SGW-U), a packet data network gateway user plane (packet data network gateway user plane, PGW-U), or a network element in which an SGW-U and a PGW-U are co-deployed. In the 5G communication system, a user plane network element may be a user plane function (user plane function, UPF) network element.

As shown in FIG. 2, in the core network, the application network element and the network exposure network element are connected to each other through an N33 interface, the application network element and the policy control network element are connected to each other through an N5 interface, the policy control network element and the session management network element are connected to each other through an N7 interface, the session management network element and the access management network element are connected to each other through an N11 interface, the session management network element and the user plane network element are connected to each other through an N4 interface, and the user plane network element and the data network are connected to each other through an N6 interface. In the communication system shown in FIG. 2, the data network may include the server, the data network or the server is connected to the user plane network element through the N6 interface, the user plane network element is connected to the access network device through an N3 interface, and the access network device is connected to the terminal through a Uu interface.

In a future communication system, for example, a 6G communication system, the foregoing network element or device may still use a name of the network element or the device in a 4G communication system or the 5G communication system, or may have another name. This is not limited in embodiments of this application. The functions of the network elements or the devices may be implemented by one independent network element, or may be jointly implemented by several network elements. During actual deployment, the network elements in the core network may be deployed on a same physical device or different physical devices. For example, in possible deployment, the AMF and the SMF may be deployed on a same physical device. For another example, a network element in a 5G core network and a network element in a 4G core network may be deployed on a same physical device. This is not limited in embodiments of this application.

In addition, the foregoing interface name is merely an example. This is not limited in this application.

FIG. 3 is a diagram of another architecture of a communication system according to an embodiment of this application.

As shown in FIG. 3, the communication system includes a terminal #1, an access network device #1, a user plane network element, an access network device #2, and a terminal #2. The communication system may also be referred to as a terminal-terminal communication network. For example, in a tactile internet, the terminal #1 is an interface between a haptic user and a manual system in a primary domain, and the terminal #2 is a remotely controlled robot or a teleoperator in a controlled domain. The primary domain receives an audio/video feedback signal from the controlled domain. With the help of various commands and feedback signals, the primary domain and the controlled domain are connected to each other through a bidirectional communication link in a network domain. This forms a global control ring. The communication system shown in FIG. 3 may also be referred to as a terminal-network-terminal architecture.

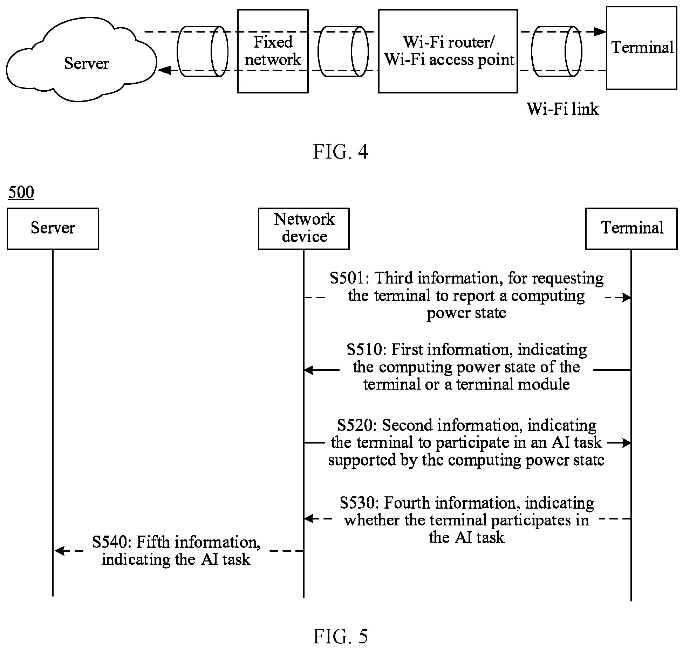

FIG. 4 is a diagram of still another architecture of a communication system according to an embodiment of this application.

As shown in FIG. 4, the communication system includes a server, a fixed network, a Wi-Fi router (or a Wi-Fi access point, or a set-top box), and a terminal. The cloud server transmits media data (for example, XR data) having a large data volume or common video data to the terminal through the fixed network and the Wi-Fi router. The communication system shown in FIG. 4 may also be referred to as a Wi-Fi architecture.

It should be understood that, architectures of the communication systems shown in FIG. 1 to FIG. 4 are merely examples for description, and a network architecture to which embodiments of this application are applicable is not limited thereto. Embodiments of this application are applicable to any network architecture in which functions of the foregoing network elements can be implemented.

Artificial intelligence (artificial intelligence, AI) is an application of computers or machines, and is applied to executing tasks that usually require human intelligence, such as learning, problem solving, decision-making, and natural language processing. AI tasks include but are not limited to tasks in fields such as machine learning, natural language processing, and computer vision.

A size of an AI task may be represented by an AI model. In recent years, AI models represented by a chat generative pre-trained transformer (chat generative pre-trained transformer, ChatGPT) have played an active role in promoting generative AI through outstanding natural language capabilities and multi-modal understanding capabilities. However, the AI models have a huge quantity of parameters and training data, leading to an increasing requirement for computing power. In other words, computational workloads of the AI task is increasing, , leading to growing demands for computing power and severely restricting the application and development of AI.

With continuous development of science and technology, a terminal also has a specific computing capability, and can handle a specific amount of AI computation. Therefore, different nodes in a communication system, such as the terminal, may also participate in execution of the AI task, thereby improving execution efficiency of the AI task.

When different nodes in the communication system participate in execution of the AI task, how to appropriately assign the AI task affects the execution efficiency of the AI task.

In view of this, this application provides a communication method, to improve execution efficiency of an AI task by appropriately assigning the AI task.

The following further describes the communication method and a communication apparatus provided in this application with reference to the accompanying drawings. It may be understood that, in this application, example descriptions are given by using an example in which a network device, a terminal, and a server serve as execution bodies of an interaction example, but the execution bodies of the interaction example are not limited in this application. For example, a method performed by the network device in this application may alternatively be implemented by a module (for example, a circuit, a chip, or a chip system) in the network device, or a logical node, a logical module, or software that can implement all or a part of network functions. A method performed by the terminal in this application may alternatively be implemented by a communication module in the terminal or a circuit or chip (for example, a modem chip (also referred to as a baseband chip), an SoC chip that includes a modem core, or a SIP chip) that is responsible for a communication function in the terminal. A method performed by the server in this application may alternatively be implemented by a module (for example, a circuit, a chip, or a chip system) in the server, or a logical node, a logical module, or software that can implement all or a part of the server.

FIG. 5 is a schematic flowchart of a communication method according to this application. As shown in FIG. 5, the method 500 may include the following steps.

S510: A terminal sends first information to a network device, and correspondingly, the network device receives the first information.

The first information indicates a computing power state of the terminal or a terminal module, and the first information may also be referred to as reported information.

The first information may indicate the computing power state of the terminal, or may indicate the computing power state of the terminal module in the terminal. The terminal module may be a communication module in the terminal or a circuit or a chip that is responsible for a communication function in the terminal. The chip may be a modem chip (also referred to as a baseband chip), an SoC chip including a modem core, or a SIP chip.

Computing power (computing power) refers to a volume of data that can be processed by a computer or other compute devices within a specific period of time or a quantity of compute tasks that can be completed by a computer or other compute devices within a specific period of time. The computing power is usually used to describe performance of the computer or the other compute devices, and is an important indicator for measuring a processing capability of the compute device. The computing power may be measured in various manners, such as a computing speed, energy consumption of computation, computational precision, and parallelism. In this application, the computing power state includes at least one of the following: computing power precision, the computing speed, power, a memory state, and a quantity of AI model parameters that can be computed.

It should be understood that, computing power states may be classified into a basic computing power state (basic computing state, BCS) and a real-time computing power state (real-time computing state, RCS). The basic computing power state reflects an inherent level of computing power of the terminal or the terminal module, for example, the computing power precision and the computing speed. The real-time computing power state reflects a level of computing power that constantly changes based on a usage state of the terminal, for example, the power, the memory state, and the quantity of AI model parameters that can be computed. The following briefly describes the computing power states.
(1) The computing power precision (precision), which may also be referred to as precision bit-width or computational precision, is computational precision of a maximum bit-width that can be supported by the terminal or the terminal module, and reflects the inherent level of the computing power of the terminal or the terminal module. The computing power precision may include integer (INT) types, half precision, single precision, double precision, and the like. Integer types may be classified into an 8-bit integer (INT8), a 4-bit integer (INT4), a 2-bit integer (INT2), and the like. The half precision refers to a 16-bit floating point number (Float16), the single precision refers to a 32-bit floating point number (Float32), and the double precision refers to a 64-bit floating point number (double 64).

For example, the computing power precision may be represented as a 1-bit field, a 2-bit field, or a 3-bit field. For example, the field has 2 bits, and a mapping relationship between a value of the field and the computing power precision is shown in Table 1.

**Table 1**

| Field value | 00 | 01 | 10 | 11 |
|---|---|---|---|---|
| Computing power precision | Integer type | Half precision | Single precision | Double precision |

It should be understood that, the mapping relationship in Table 1 is merely an example, and the computing power precision may alternatively be indicated by using more or fewer bits. For example, a quantity of bits may be increased to represent computing power precision of the INT4 type or the INT2 type.

(2) The computing speed refers to a level of an operation speed that can be supported by the terminal or the terminal module, and the level may be a largest value, or may be an average value or a smallest value. For example, the computing speed is a maximum value of an operation speed that can be supported by the terminal or the terminal module. In this case, the computing speed may also be referred to as a computing power upper limit (computing-bound).

For example, a unit of the computing speed may be tera floating point operations per second (floating point operations per second, TFLOPS), tera operations per second (tera operations per second, TOPS), instructions per second (instructions per second, IPS), transactions per second (transactions per second, TPS), or the like, or may be another unit.

For reference, a highest computing speed of some mobile phone terminals may reach 15 TOPS, a computing speed of some laptops with precision of Float16 may reach 2 TFLOPS, and a computing speed of some graphics card may reach 256 TFLOPS or 460 TFLOPS.

For example, the computing speed may be represented as a 1-bit field, a 2-bit field, or a 3-bit field. For example, the field has 2 bits, and a mapping relationship between a value of the field and the computing speed is shown in Table 2.

**Table 2**

| Field value | 00 | 01 | 10 | 11 |
|---|---|---|---|---|
| Computing speed | <1 TFLOPS | 1 TFLOPS to 5 TFLOPS | 5 TFLOPS to 25 TFLOPS | >25 TFLOPS |

It should be understood that, the mapping relationship in Table 2 is merely an example, and the computing power precision may alternatively be indicated by using more or fewer bits, or may be indicated by using another unit.

(3) The power (power) reflects an energy consumption state of the terminal. The power may be represented by a percentage of remaining power, or may be represented by a percentage of consumed power.

For example, the power may be represented as a 1-bit field, a 2-bit field, or a 3-bit field. For example, the field has 2 bits, and a mapping relationship between a value of the field and the power is shown in Table 3.

**Table 3**

| Field value | 00 | 01 | 10 | 11 |
|---|---|---|---|---|
| Power | <30% | 30% to 60% | 60% to 80% | >80% |

It should be understood that, the percentage in Table 3 may represent the percentage of the remaining power. The mapping relationship in Table 3 is merely an example, and the power may alternatively be indicated by using more or fewer bits, or may be indicated in another manner.

(4) The memory state may also be referred to as memory usage, refers to a usage state of a storage unit in the terminal, and may be represented by using an occupation (occupation) rate of the storage unit, or may be represented by using a remaining rate of the storage unit.

In this application, the storage unit may be implemented by using a memory. For descriptions of the memory, refer to descriptions in subsequent apparatus embodiments of this application.

For example, the memory state may be represented as a 1-bit field, a 2-bit field, or a 3-bit field. For example, the field has 2 bits, and a mapping relationship between a value of the field and the memory state is shown in Table 4.

**Table 4**

| Value | 00 | 01 | 10 | 11 |
|---|---|---|---|---|
| Memory state | <30% | 30% to 60% | 60% to 80% | >80% |

It should be understood that, the percentage in Table 4 may represent the occupation rate of the memory. The mapping relationship in Table 4 is merely an example, and the memory state may alternatively be indicated by using more or fewer bits, or may be indicated in another manner.

(5) The quantity of AI model parameters that can be computed reflects a scale of AI model parameters that can be computed by the terminal or the terminal module through inference. A model parameter may include a weight parameter, an offset parameter, a standardization coefficient, an activation parameter, and the like. A quantity of AI model parameters may also be referred to as a quantity of neural network model parameters. The quantity of AI model parameters that can be computed may also be referred to as a computing power level.

The quantity of AI model parameters that can be computed by the terminal or the terminal module is related to a real-time state of the terminal. The terminal may determine, based on a real-time state like the power or the memory state, the quantity of AI model parameters that can be computed by the terminal.

For example, a unit of the quantity of AI model parameters may be million (million, M) or billion (billion, B). Based on quantities of AI model parameters, AI models may be classified into a shallow model, a small model, and a large model.

It should be understood that, the foregoing classification manner is merely an example. There is no fixed standard for a classification manner of the AI models, and classification may be performed based on the quantity of AI model parameters that can be computed by the terminal as a reference value.

The terminal may indicate, to the network device in the following two manners, the quantity of AI model parameters that can be computed by the terminal.

Manner 1: The terminal directly indicates the quantity of AI model parameters that can be computed by the terminal.

For example, the quantity of AI model parameters that can be computed by the terminal or the terminal module may be represented as a field of 1 bit to 4 bits. For example, the field has 2 bits, and a value of the field and the quantity of AI model parameters have the following mapping relationship, as shown in Table 5.

**Table 5**

| Value | 00 | 01 | 10 | 11 |
|---|---|---|---|---|
| Quantity of AI model parameters | <10 M | 10 M to 0.1 B | 0.1 B to 1 B | >1 B |

It should be understood that, the mapping relationship in Table 5 is merely an example, and the quantity of AI model parameters may alternatively be indicated by using more or fewer bits.

Manner 2: The network device indicates the quantity of AI model parameters to the terminal, and the terminal indicates, by feeding back yes or no, whether the terminal can compute the AI model parameters of the order of magnitude.

For example, the network device may use a field of 1 bit to 4 bits to indicate a quantity of to-be-computed AI model parameters. For example, the field has 2 bits, and a value of the field and the quantity of AI model parameters have the mapping relationship shown in Table 5. The terminal may feed back, by using a 1-bit field, whether the AI model parameters of the order of magnitude can be computed. A value of the field and the quantity of AI model parameters that can be computed by the terminal or the terminal module have a mapping relationship shown in Table 6.

**Table 6**

| Value | 0 | 1 |
|---|---|---|
| Whether a terminal or a terminal module can compute AI model parameters that is in a quantity and that is indicated by a network device | No | Yes |

It should be understood that, the mapping relationship in Table 6 is merely an example. Alternatively, the terminal may not provide a feedback. This indicates that the terminal does not participate in computation of the AI model parameters.

S520: The network device sends second information to the terminal, and correspondingly, the terminal receives the second information.

The second information indicates the terminal to participate in an AI task supported by the computing power state. The second information may also be referred to as task indication information.

In this application, the AI task supported by the computing power state may be understood as that the computing power state supports execution of the AI task, or may be understood as an AI task that matches the computing power state, or an AI task that can be executed in the computing power state. In other words, the AI task can be executed only when the AI task needs the computing power state of the level.

In other words, the network device may determine the second information based on the first information.

AI tasks include but are not limited to tasks in fields such as machine learning, natural language processing, and computer vision. The tasks include classification, regression, clustering, sequence generation, reinforcement learning, and the like. To implement the foregoing tasks, processes such as data collection, model training, model inference, and model testing are required. In this application, the AI task includes at least one of the following: AI-based data transmission, AI model parameter training, and training data collection of the AI model. The following briefly describes the AI tasks.
(1) The AI-based data transmission may also be referred to as neural network-based transmission. AI-based model transmission is a data transmission manner, and depends on feature extraction and restoration of an AI network, or depends on a feature encoding and decoding process of an AI network. AI-based data transmission may be understood as a process of AI model inference.
   Specifically, a conventional video coding method depends on a manually-designed complex algorithm, and it is difficult to effectively use a complex correlation between intra-frame and inter-frame pixel blocks of a video. Neural video coding (neural video coding, NVC) is a video coding method based on a neural network. NVC uses a neural network model to learn features and compression methods of video coding. First, video sequences are pre-processed and features are extracts, and then the neural network is used to learn a representation of the features and perform lossy or lossless compression. In comparison with a conventional manually-designed coding scheme, NVC has a powerful nonlinear coding capability, can be used to effectively extract video features, and improves a video compression capability. AI-based data transmission means that to-be-transmitted data is first encoded based on NVC, and then encoded data is transmitted.
(2) AI model parameter training refers to adjusting parameters in a model by using known data, to generate a model that can resolve a specific problem. A training objective is to maximize accuracy of prediction or classification of the model. A training process may be understood as a process of continuous iteration. AI model parameter training may be understood as AI model training or neural network model training.
(3) Training data collection of the AI model refers to collection of data required for AI model parameter training. Training data is also referred to as sensing data.

It should be understood that, the computing power is closely related to AI, because AI usually requires substantial computing capabilities for training, inference, and the like. In this application, the network device may determine a corresponding AI task based on the computing power state reported by the terminal, so that the terminal can participate in an AI task that matches the computing power state of the terminal.

Specifically, when a level of the computing power state of the terminal is high, the terminal can perform computation and inference to some extent, and can implement AI-based encoding and decoding. In this case, the network device may indicate the terminal device to participate in AI-based data transmission. When the computing power state of the terminal reaches a level at which the terminal can participate in model parameter training, the network device may indicate the terminal to participate in AI model parameter training. When the network device has a data collection requirement and a channel transmission state is good, if the network device determines, based on the computing power state, that the power of the terminal is sufficient, the network device may indicate the terminal to participate in training data collection.

For example, when the computing power precision is INT8, the computing speed is 100 FLOPS, the power is 90%, the memory state is 40%, and the quantity of AI model parameters that can be computed is less than 10 M, the AI task may be training data collection or model inference.

For another example, when the computing power precision is Float32, the computing speed is 30 FLOPS, the power is 90%, the memory state is 40%, and the quantity of AI model parameters that can be computed is less than 10 M, the AI task may be training data collection, AI-based data transmission, or AI model parameter training.

It should be understood that, the network device may indicate the terminal to participate in one or more AI tasks. For example, the network device may indicate the terminal to participate in AI model parameter training and training data collection.

Optionally, the AI task in which the network device indicates the terminal to participate may further include AI model inference, an AI model test, and the like.

Moreover, in addition to indicating the terminal to participate in the AI task, the network device may further indicate the terminal to participate in a non-AI task. For example, the terminal is indicated to perform conventional transmission, the terminal is indicated not to participate in training, or the terminal is indicated not to collect training data. Conventional transmission is to encode to-be-transmitted data according to a conventional video coding method, and then transmit encoded data, or to transmit content according to an existing transmission protocol.

The second information may be a plurality of information elements. For example, AI tasks are classified into three types, the second information may be three information elements, each information element has 1 bit, and each information element corresponds to one AI task and indicates whether the terminal participates in the AI task. Details are shown in Table 7.

**Table 7**

| Value | 0 | 1 |
|---|---|---|
| Task 1 | Conventional transmission | AI-based data transmission |
| Task 2 | No requirement | AI model parameter training |
| Task 3 | No requirement | Training data collection of an AI model |

According to the foregoing solution, the terminal may collaboratively participate in execution of the AI task, so that execution efficiency of the AI task can be improved.

In addition, the terminal may report the computing power state of the terminal, so that the network device can indicate the terminal to participate in an AI task that is supported by the computing power state of the terminal, to make assignment of the AI task more appropriate and further improve execution efficiency of the AI task.

Further, the AI model has a trend of cloud-edge collaborative deployment. The terminal can participate in execution of the AI task in a collaborative manner, so that the AI model can be deployed more appropriately.

Optionally, the method 500 further includes: S501: The network device sends third information to the terminal, and correspondingly, the terminal receives the third information.

The third information is used to request the terminal to report the computing power state. The third information may also be referred to as request information.

Specifically, the network device may determine whether the terminal needs to participate in the AI task. When the terminal needs to participate in the AI task, the network device requests, by using the third information, the terminal to report the computing power state of the terminal, to determine an AI task that matches the computing power state.

In this manner, the AI task can be assigned more appropriately and accurately, so that the terminal can better participate in execution of the AI task, thereby improving efficiency.

For example, the third information may have 1 bit, and values 0 and 1 of the bit respectively indicates whether the terminal needs to report computing power information.

Optionally, in an implementation, in S510, if the terminal feeds back, in Manner 2 described above, the quantity of AI model parameters that can be computed by the terminal, the network device may indicate the quantity of AI model parameters to the terminal by using the third information. For example, the third information has 2 bits, the 2 bits indicate a quantity of AI model parameters to be computed by the network device (where for a mapping relationship, refer to Table 5), and the 2 bits further indicate the terminal to report computing power information.

Optionally, the method 500 further includes: S530: The terminal sends fourth information to the network device, and correspondingly, the network device receives the fourth information.

The fourth information indicates whether the terminal participates in the AI task. The fourth information may also be referred to as response information.

Specifically, the terminal may determine, based on a current computing power state of the terminal, whether to participate in the AI task indicated by the network device, and indicate, to the network device by using the fourth information, whether to participate in the AI task.

It should be understood that, after the terminal reports the computing power state, the computing power state of the terminal may change. Therefore, when the terminal receives the second information, if the current computing power state of the terminal cannot support execution of the AI task indicated by the second information, the terminal may indicate, to the network device by using the fourth information, that the terminal does not participate in the AI task. If the current computing power state of the terminal can further support execution of the AI task indicated by the second information, the terminal may indicate, to the network device by using the fourth information, that the terminal participates in the AI task.

In this manner, the terminal can participate in the AI task more appropriately, so that computing power resources of the terminal can be maximized.

For example, when the second information includes three information elements, the fourth information may have 3 bits, and each bit corresponds to one AI task and represents whether the terminal participates in the AI task.

Optionally, S530 may not be performed. To be specific, it is considered by default that the terminal receives an indication of the network device, and participates in the AI task determined by the network device.

In this manner, resources can be saved, and overheads can be reduced.

Optionally, the method 500 includes: S540: The network device sends fifth information to a server, and correspondingly, an application server receives the fifth information.

The fifth information indicates the AI task. The fifth information may also be referred to as notification information.

Specifically, the network device may notify the server of an AI task in which the terminal may participate, so that the server can schedule and assign AI tasks of different users.

In this application, the server may be the application server (application server, AS).

Specifically, implementations of S530 and S540 include the two following cases.

Case 1: S530 is not performed, and S540 is performed. Specifically, after S520, the terminal participates in the AI task based on an indication of the second information, and does not need to feed back whether the terminal participates in the AI task (that is, S530 is not performed). In this case, the network device notifies the server of the AI task in which the terminal participates (that is, S540 is performed).

Case 2: S530 is performed, and S540 is performed when the fourth information indicates that the terminal participates in the AI task. Specifically, after S520, the terminal needs to feed back whether to participate in the AI task (that is, S530 is performed). The network device notifies, based on a feedback of the terminal, the server of the AI task in which the terminal participates, only when the terminal participates in the AI task (that is, S540 is performed). If the terminal feeds back that the terminal does not participate in the AI task indicated by the network device, the network device does not notify the server of the AI task (that is, S540 is not performed).

In an implementation, the network device is an access network device.

In this implementation, the first information may be carried in uplink control information (uplink control information, UCI), user assistance information (user assistant information, UAI) in radio resource control (radio resource control, RRC) signaling, or a media access control control element (media access control control element, MAC CE). Similarly, the fourth information may also be carried in UCI, UAI, or a MAC CE.

In this implementation, the second information may be carried in downlink control information (downlink control information, DCI), RRC signaling, or a MAC CE. Similarly, the third information may be carried in DCI, RRC signaling, or a MAC CE.

It should be understood that in this implementation, the access network device may communicate with the server through a core network element.

In another implementation, the network device is a core network element.

For example, the core network element is an access management network element, and the first information may be carried in non-access stratum (non-access stratum, NAS) signaling. Similarly, the second information, the third information, and the fourth information may also be carried in NAS signaling.

For another example, the core network element is a newly added network element, for example, may be referred to as a computing network element, and is configured to execute the AI task. The core network element may also assign a part of AI tasks to the terminal based on the computing power state of the terminal.

It should be understood that, in this implementation, the core network element may communicate with the terminal through the access network device.

It should be understood that, in various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It should be further understood that, in some of the foregoing embodiments, a device in a conventional network architecture is mainly used as an example for description (for example, a network device and a terminal device). It should be understood that a specific form of the device is not limited in embodiments of this application. For example, all devices that can implement a same function in the future are applicable to embodiments of this application.

It may be understood that, in the foregoing method embodiments, methods and operations implemented by a device (for example, a network device or a terminal device) may alternatively be implemented by a component (for example, a chip or a circuit) in the device.

In this application, "sending information" may be understood as that a device sends information to another device, or may be understood as that a logical module in a device sends information to another logical module. For example, "a network device sends information" may be understood as that the network device sends information to another device (for example, a terminal), or may be understood as that a logical module 1 in the network device sends information to a logical module 2 in the network device.

In this application, "receiving information" may be understood as that a device receives information from another device, or may be understood as that a logical module in a device receives information from another logical module. For example, "a network device receives information" may be understood as that the network device receives information from another device (for example, a terminal), or may be understood as that a logical module 1 in the network device receives information from a logical module 2 in the network device.

In addition, in this application, "sending information to ... (an access network device)" may be understood as that a destination of the information is the access network device, and may include directly or indirectly sending the information to the access network device. "Receiving information from ... (an access network device)" may be understood as that a source of the information is the access network device, and may include directly or indirectly receiving the information from the access network device. Information may undergo necessary processing, for example, a format change, between a source for sending the information and a destination. However, the destination may understand valid information from the source. Similar expressions in this application may be understood similarly. Details are not described herein again.

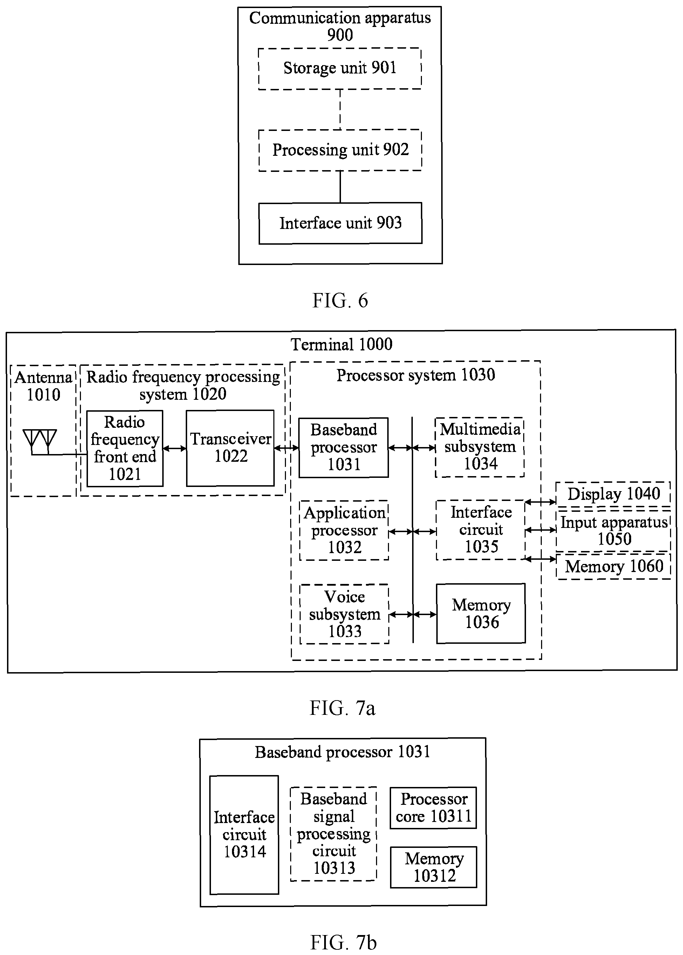

The foregoing describes in detail the communication method provided in embodiments of this application with reference to FIG. 1 to FIG. 5. The following describes in detail communication apparatuses provided in embodiments of this application with reference to FIG. 6 and FIG. 7a and FIG. 7b.

FIG. 6 is a possible example block diagram of a communication apparatus according to an embodiment of this application. As shown in FIG. 6, a communication apparatus 900 may include a corresponding module or unit configured to implement the foregoing method embodiments. In a possible design, the communication apparatus 900 includes an interface unit 903. Optionally, the communication apparatus 900 may further include a processing unit 902 and a storage unit 901, configured to store apparatus program code and/or data. The interface unit 903 may also be referred to as a communication interface, a transceiver unit, or a communication unit.

The communication apparatus 900 may be a terminal side apparatus in the foregoing embodiments, for example, a terminal or a communication module in a terminal, or a circuit or a chip that is responsible for a communication function in a terminal.

For example, in an embodiment, the interface unit 903 is configured to send first information to a network device, where the first information indicates a computing power state of the terminal or a terminal module; and the interface unit 903 is further configured to receive second information from the network device, where the second information indicates the terminal to participate in an AI task supported by the computing power state.

In a possible design, the computing power state includes at least one of the following: computing power precision, a computing speed, power, a memory state, and a quantity of AI model parameters that can be computed.

In a possible design, the AI task includes at least one of the following: AI-based data transmission, AI model parameter training, and training data collection of an AI model.

In a possible design, the interface unit 903 is further configured to receive third information from the network device, where the third information is used to request the terminal to report the computing power state.

In a possible design, the interface unit 903 is further configured to send fourth information to the network device, where the fourth information indicates whether the terminal participates in the AI task.

In a possible design, the network device is a core network element or an access network device.

In a possible design, when the communication apparatus 900 is a terminal or a communication module in a terminal, a function of the processing unit 902 may be implemented by one or more processors. Specifically, the processor may include a modem chip, a system on chip SoC chip including a modem core, or a SIP chip. A function of a communication unit 903 may be implemented by a transceiver circuit.

In a possible design, when the communication apparatus 900 is a circuit or a chip that is responsible for a communication function in a terminal, for example, a modem chip, a system on chip SoC chip including a modem core, or a SIP chip, the function of the processing unit 902 may be implemented by a circuit system that is in the chip and that includes one or more processors or processor cores. The function of the communication unit 903 may be implemented by an interface circuit or a data transceiver circuit on the foregoing chip.

It should be understood that, the communication apparatus 900 may further include an AI chip. Specifically, a chip that can run an AI algorithm may be referred to as the AI chip, or a chip that has a special acceleration design for an AI algorithm may be referred to as the AI chip. The AI chip may also be referred to as an AI accelerator or a computing card, and is configured to process a compute task in an AI application. A central processing unit (central processing unit, CPU) may still be responsible for other non-AI compute tasks. The AI chip may include a graphics processing unit (graphics processing unit, GPU), a field programmable gate array (field programmable gate array, FPGA), an application-specific integrated circuit (application-specific integrated circuit, ASIC), an artificial intelligence processor (artificial intelligence processor, AI processor), a neural network processing unit (neural processing unit, NPU), and the like.

The communication apparatus 900 may be a network side apparatus in the foregoing embodiments, for example, an access network device, a module (for example, a circuit, a chip, or a chip system) in an access network device, or a logical node or a logical module that can implement all or a part of functions of an access network device, for another example, a core network element, or a module (for example, a circuit, a chip, or a chip system) in a core network element, or a logical node or a logical module that can implement all or a part of functions of a core network element.

For example, in an embodiment, the interface unit 903 is configured to receive first information from a terminal, where the first information indicates a computing power state of the terminal or a terminal module; and the interface unit 903 is further configured to send second information to the terminal, where the second information indicates the terminal to participate in an AI task supported by the computing power state.

In a possible design, the computing power state includes at least one of the following: computing power precision, a computing speed, power, a memory state, and a quantity of AI model parameters that can be computed.

In a possible design, the AI task includes at least one of the following: AI-based data transmission, AI model parameter training, and training data collection of an AI model.

In a possible design, the interface unit 903 is further configured to send third information to the terminal, where the third information is used to request the terminal to report the computing power state.

In a possible design, the interface unit 903 is further configured to send fifth information to a server, where the fifth information indicates the AI task.

In a possible design, the interface unit 903 is further configured to receive fourth information from the terminal, where the fourth information indicates whether the terminal participates in the AI task.

In a possible design, when the fourth information indicates that the terminal participates in the AI task, the interface unit 903 is further configured to send fifth information to a server, where the fifth information indicates the AI task.

In a possible design, when the communication apparatus 900 is a network device or a communication module in a network device, a function of the processing unit 902 may be implemented by one or more processors. Specifically, the processor may include a chip. A function of the communication unit 903 may be implemented by a transceiver circuit.

It may be understood that, unit division in the foregoing apparatus is merely logical function division. Each function may correspond to one functional unit, or two or more functions may be integrated into one functional unit. During actual implementation, all or a part of units may be integrated into one physical entity, or may be distributed on different physical entities. In addition, the foregoing functional units may be implemented in a form of hardware, or may be implemented in a form of software, or may be implemented in a form of hardware in combination with software. Whether a function is performed by hardware or software depends on particular applications and design constraint conditions of the technical solutions. A person skilled in the art may use different methods to implement the described functions for a particular application, but it should not be considered that the implementation goes beyond the scope of this application.

In an example, a functional unit in any one of the foregoing apparatuses may be disposed as one or more integrated circuits for implementing the foregoing methods, for example, one or more ASICs, one or more CPUs, one or more microprocessors (microprocessor units, MPUs), one or more microcontrollers (microcontroller units, MCUs), one or more digital signal processors (digital signal processors, DSPs), one or more FPGAs, or a combination of at least two of the integrated circuit forms.

In an example, the storage unit 901 may include a random access memory, a flash memory, a read-only memory, a programmable read-only memory, or an electrically erasable programmable memory and/or a register.

FIG. 7a and FIG. 7b are a diagram of a structure of a terminal 1000 according to an embodiment of this application. The terminal 1000 may correspond to the terminals shown in FIG. 1 to FIG. 4, and is configured to implement operations of the terminal in the foregoing embodiments. As shown in FIG. 7a, the terminal 1000 includes one or more antennas 1010, a radio frequency processing system 1020, and a processor system 1030.

In a downlink or sidelink direction, the radio frequency processing system 1020 receives a radio frequency signal by using the antenna 1010, and sends a signal obtained after radio frequency processing to the processor system 1030 for further processing. In an uplink or sidelink direction, the processor system 1030 performs signal processing on information on a terminal side, and then sends a signal to the radio frequency processing system 1020. The radio frequency processing system 1020 performs radio frequency processing on the signal, and then sends the signal through the antenna 1010.

In an example, the radio frequency processing system 1020 is used as a communication interface for a terminal to communicate with the outside, and may include a radio frequency front end 1021 (RF front end, RFFE) and a radio frequency transceiver 1022 (RF transceiver). The RFFE 1021 is mainly configured to perform one or more items of processing such as shaping, passband selection, or gain on an RF signal received by the antenna or an RF signal to be sent by using the antenna, and may include one or more of components such as a radio frequency switch, a duplexer, a filter, a power amplifier, antenna tuning, and a low noise amplifier. The RFFE 1021 may be a circuit system including a plurality of discrete devices, or may be integrated and packaged in one or more chips. The radio frequency transceiver 1022 is configured to process the RF signal received by the RFFE into a baseband/intermediate frequency signal for the processor system 1030 to perform next step of processing, and process the baseband/intermediate frequency signal provided by the processor system 1030 into an RF signal for sending to the RFFE 1021. The baseband/intermediate frequency signal transmitted between the radio frequency transceiver 1022 and the processor system 1030 may be a digital signal or an analog signal. The radio frequency transceiver 1022 may be implemented by one or more chips, and the chip is usually referred to as a radio frequency chip (RFIC).

In an example, the processor system 1030 may include one or more processors configured to process signals and execute one or more communication protocols. Optionally, the processor system 1030 may further include a memory 1036. In an example, the one or more processors include at least one baseband processor 1031 (also referred to as a modem (modem) processor). The memory 1036 is configured to store data and/or computer program instructions. Optionally, the processor system 1030 may further include one or more application processors 1032, configured to implement processing on a terminal operating system and an application layer. Optionally, the processor system 1030 may further include one or more of a voice subsystem 1033, a multimedia subsystem 1034, or an interface circuit 1035. The voice subsystem 1033 is configured to process a voice signal, the multimedia subsystem 1034 is configured to process a multimedia-related operation, for example, video encoding and decoding and image processing, and the interface circuit 1035 is configured to implement communication with another terminal component, like a display 1040, an input apparatus 1050, and a memory 1060. The foregoing components in the processor system 1030 may communicate with each other by using a bus or a communication interface circuit.

In an example, the processor system 1030 may be encapsulated into a processor chip, for example, an SoC chip or a SIP chip. In an example, the processor system 1030 may be a system including a plurality of chips. For example, the baseband processor 1031 in the processor system 1030 may be independently encapsulated into a chip, or may be encapsulated into a chip with a part or all of circuits of the radio frequency processing system.

In an example, the memory 1036 may be an on-chip memory, that is, located on a chip of the processor system 1030. In an example, the memory 1060 may be an off-chip memory, that is, located outside a chip of the processor system 1030.

In an example, as shown in FIG. 7b, the baseband processor 1031 in the terminal 1000 provided in this embodiment of this application may include one or more processor cores 10311 and an interface circuit 10314. The one or more processor cores 10311 are configured to process signals and execute one or more communication protocols. Optionally, the baseband processor 1031 may further include a memory 10312, and the memory 10312 is configured to store at least a part of corresponding computer program instructions and/or corresponding data. In an example, the one or more processor cores 10311 execute the computer program instructions stored in the memory 10312, to implement a related operation in the foregoing method embodiment (for example, generate first information, where the first information indicates a computing power state of a terminal or a terminal module). In this disclosure, that the memory 10312 is configured to store the corresponding computer program instructions and/or data may mean that the memory 10312 is configured to store all corresponding computer program instructions and/or data for execution by the processor core 10311; or may mean that the memory 10312 may be configured to store a part of corresponding computer program instructions and/or data. The part of corresponding computer program instructions and/or data include/includes a computer program instructions and/or data that need/needs to be executed by the processor core 10311 currently. The memory 10312 may store different parts of computer program instructions and/or data for execution by the processor core 10311 to perform related operations in the foregoing method embodiments. As a communication interface, the interface circuit 10314 is configured to implement communication with another component, for example, transmit a signal with the radio frequency processing system 1020, and communicate with other subsystems and related components of the processor system 1030 by using the bus, for example, transmit a data control signal with the application processor 1032, and transmit data or computer program instructions with the memory 1036 or the memory 1060. Optionally, to reduce load of the processor core, the baseband signal processing circuit 10313 may be further disposed to implement processing of at least a part of baseband signals, including one or more of demodulation, modulation, encoding, decoding, or the like of a signal.

In an example, the communication apparatus provided in this application may be the terminal 1000, includes a communication module of the processor system 1030 and a radio frequency system 1020, the processor system 1030, or the baseband processor 1031.

The processor, the processor system, the application processor, the baseband processor, the processor circuit, or the processor core may be collectively referred to as a processor. The processor may include a combination of one or more of a CPU, a DSP, an MPU, an MCU, a GPU, an FPGA, an ASIC, an AI processor, or an NPU.

The memory may include one or more of the following storage media: a random access memory (random access memory, RAM), static random access memory (static RAM, SRAM), a dynamic random access memory (dynamic RAM, DRAM), a phase change memory (phase change memory, PCM), a resistive random access memory (resistive RAM, ReRAM), magnetoresistive random access memory (magnetoresistive RAM, MRAM), ferroelectric random access memory (ferroelectric RAM, FRAM), a cache, a register, a read-only memory (read-only memory, ROM), a flash memory, an erasable programmable read-only memory (erasable programmable ROM, EPROM), a hard disk drive, and the like. In an example, computer program instructions used to execute the foregoing embodiment may be stored in a non-volatile memory, for example, at least a part of the memory 1060 (for example, may be one or more of the ROM, the flash memory, the EPROM, or the hard disk drive). When the terminal runs, a part or all of corresponding computer program instructions may be loaded to a memory that has a higher transmission speed with the processor, for example, at least a part of the memory 1036 and/or the memory 10312 (for example, may be one or more of the RAM, the SRAM, the DRAM, the PCM, the RERAM, the MRAM, the FRAM, the cache, or the register), for execution of the processor to implement the steps in the foregoing method embodiments.

In an example, the radio frequency transceiver 1022 and the radio frequency front end 1021 may also be encapsulated into one chip. In an example, the radio frequency transceiver 1022, the radio frequency front end 1021, and the baseband processor 1031 may also be encapsulated into one chip.

An embodiment of this application further provides a computer-readable storage medium. The computer-readable storage medium stores computer instructions for implementing a method performed by a communication apparatus (for example, the terminal and the network device) in the foregoing method embodiments.

An embodiment of this application further provides a computer program product, including instructions. When the instructions are executed by a computer, the method performed by a communication apparatus (for example, the terminal and the network device) in the foregoing method embodiments is implemented.

An embodiment of this application further provides a communication system. The communication system includes one or more of the terminal and the network device in the foregoing embodiments.

For explanations and beneficial effect of related content in any one of the apparatuses provided above, refer to the corresponding method embodiment provided above. Details are not described herein again.

In the foregoing embodiments, "optionally, the method further includes ..." may be understood that steps may be performed, or may not be performed, or only a part of the steps may be performed. This is not limited in this application.

In embodiments of this application, the term "example", "for example", or the like is used to represent giving an example, an illustration, or a description. Any embodiment or design solution described as an "example" in this application should not be explained as being more preferred or having more advantages than another embodiment or design solution. Exactly, use of the word "example" is intended to present a concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, the particular features, structures, or characteristics may be combined in one or more embodiments by using any appropriate manner.

It may be understood that, in various embodiments of this application, sequence numbers of the foregoing processes do not mean execution sequences in various embodiments of this application. The execution sequences of the processes should be determined based on functions and internal logic of the processes, and should not be construed as any limitation on the implementation processes of embodiments of this application. Names of all nodes and messages in this application are merely names set for ease of description in this application, and may be different in an actual network. It should not be understood that, names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, both "when" and "if" mean that corresponding processing is performed by a network element in an objective case, but are not intended to limit time. In addition, the terms do not necessarily mean that the network element needs to perform a determining action during implementation, and do not mean another limitation either. In addition, in this application, descriptions of the foregoing conditions "when" and "if" may be understood as a necessary condition, and whether the condition is a sufficient condition or whether the condition is a sufficient and necessary condition is not limited. For example, "performing B when A" may be understood as "performing B when at least A is met".

In addition, in embodiments of this application, "B corresponding to A" indicates that B is associated with A, and B may be determined based on A. However, it should be further understood that, determining B based on A does not mean that B is determined based only on A. B may alternatively be determined based on A and/or other information.

Terms "system" and "network" in embodiments of this application may be used interchangeably. "At least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that, computer program instructions may be used to implement each procedure and/or each block in the flowcharts and/or the block diagrams and a combination of a procedure and/or a block in the flowcharts and/or the block diagrams. The computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

The computer program instructions may alternatively be stored in a computer-readable memory that can instruct the computer or the another programmable data processing device to operate in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that, a person skilled in the art may make various modifications and variations to this application without departing from the scope of this application. This application is intended to cover the modifications and variations of this application provided that the modifications and variations of this application fall within the scope of protection defined by the following claims and their equivalent technologies.

## Claims

1. A communication method, wherein the method is applied to a terminal side, and the method comprises:
sending first information to a network device, wherein the first information indicates a computing power state of a terminal or a terminal module; and
receiving second information from the network device, wherein the second information indicates the terminal to participate in an artificial intelligence AI task supported by the computing power state.

2. The method according to claim 1, wherein the computing power state comprises at least one of the following:
computing power precision, a computing speed, power, a memory state, and a quantity of AI model parameters that can be computed.

3. The method according to claim 1 or 2, wherein the AI task comprises at least one of the following:
AI-based data transmission, AI model parameter training, and training data collection of an AI model.

4. The method according to any one of claims 1 to 3, wherein the method further comprises:
receiving third information from the network device, wherein the third information is used to request the terminal to report the computing power state.

5. The method according to any one of claims 1 to 4, wherein the method further comprises:
sending fourth information to the network device, wherein the fourth information indicates whether the terminal participates in the AI task.

6. The method according to any one of claims 1 to 5, wherein the network device is a core network element or an access network device.

7. A communication method, comprising:
receiving first information from a terminal, wherein the first information indicates a computing power state of the terminal or a terminal module; and
sending second information to the terminal, wherein the second information indicates the terminal to participate in an AI task supported by the computing power state.

8. The method according to claim 7, wherein the computing power state comprises at least one of the following:
computing power precision, a computing speed, power, a memory state, and a quantity of AI model parameters that are capable to be computed.

9. The method according to claim 7 or 8, wherein the AI task comprises at least one of the following:
AI-based data transmission, AI model parameter training, and training data collection of an AI model.

10. The method according to any one of claims 7 to 9, wherein the method further comprises:
sending third information to the terminal, wherein the third information is used to request the terminal to report the computing power state.

11. The method according to any one of claims 7 to 10, wherein the method further comprises:
sending fifth information to a server, wherein the fifth information indicates the AI task.

12. The method according to any one of claims 7 to 10, wherein the method further comprises:
receiving fourth information from the terminal, wherein the fourth information indicates whether the terminal participates in the AI task.

13. The method according to claim 12, wherein when the fourth information indicates that the terminal participates in the AI task, the method further comprises:
sending fifth information to a server, wherein the fifth information indicates the AI task.

14. A communication apparatus, comprising:
an interface unit, configured to send first information to a network device, wherein the first information indicates a computing power state of a terminal or a terminal module, wherein
the interface unit is further configured to receive second information from the network device, wherein the second information indicates the terminal to participate in an AI task supported by the computing power state.

15. The apparatus according to claim 14, wherein the computing power state comprises at least one of the following:
computing power precision, a computing speed, power, a memory state, and a quantity of AI model parameters that are capable to be computed.

16. The apparatus according to claim 14 or 15, wherein the AI task comprises at least one of the following:
AI-based data transmission, AI model parameter training, and training data collection of an AI model.

17. The apparatus according to any one of claims 14 to 16, wherein the interface unit is further configured to:
receive third information from the network device, wherein the third information is used to request the terminal to report the computing power state.

18. The apparatus according to any one of claims 14 to 17, wherein the interface unit is further configured to:
send fourth information to the network device, wherein the fourth information indicates whether the terminal participates in the AI task.

19. The apparatus according to any one of claims 14 to 18, wherein the network device is a core network element or an access network device.

20. A communication apparatus, comprising:
an interface unit, configured to receive first information from a terminal, wherein the first information indicates a computing power state of the terminal or a terminal module, wherein
the interface unit is further configured to send second information to the terminal, wherein the second information indicates the terminal to participate in an AI task supported by the computing power state.

21. The apparatus according to claim 20, wherein the computing power state comprises at least one of the following:
computing power precision, a computing speed, power, a memory state, and a quantity of AI model parameters that are capable to be computed.

22. The apparatus according to claim 20 or 21, wherein the AI task comprises at least one of the following:
AI-based data transmission, AI model parameter training, and training data collection of an AI model.

23. The apparatus according to any one of claims 20 to 22, wherein the interface unit is further configured to:
send third information to the terminal, wherein the third information is used to request the terminal to report the computing power state.

24. The apparatus according to any one of claims 20 to 23, wherein the interface unit is further configured to:
send fifth information to a server, wherein the fifth information indicates the AI task.

25. The apparatus according to any one of claims 20 to 23, wherein the interface unit is further configured to:
receive fourth information from the terminal, wherein the fourth information indicates whether the terminal participates in the AI task.

26. The apparatus according to claim 25, wherein when the fourth information indicates that the terminal participates in the AI task, the interface unit is further configured to:
send fifth information to a server, wherein the fifth information indicates the AI task.

27. A communication apparatus, comprising one or more processors, wherein the one or more processors are configured to cause, by executing a computer program or instructions stored in a memory or through a logic circuit, the apparatus to perform the method according to any one of claims 1 to 6.

28. A communication apparatus, comprising one or more processors, wherein the one or more processors are configured to cause, by executing a computer program or instructions stored in a memory or through a logic circuit, the apparatus to perform the method according to any one of claims 7 to 13.

29. A computer-readable storage medium, wherein the computer-readable storage medium stores a computer program or instructions, and when the computer program or the instructions are run, the method according to any one of claims 1 to 6 is performed, or the method according to any one of claims 7 to 13 is performed.

30. A computer program product, comprising instructions, and when the instructions are run, the method according to any one of claims 1 to 6 is performed, or the method according to any one of claims 7 to 13 is performed.
